(19) Europäisches Patentamt
European Patent Office
Office européen des brevets

(11) Publication number: 0 157 981
A1

(12) EUROPEAN PATENT APPLICATION

(21) Application number: 84306692.9

(51) Int. Cl.[4]: F 02 M 25/02

(22) Date of filing: 01.10.84

(30) Priority: 30.09.83 GB 8326182

(43) Date of publication of application:
16.10.85 Bulletin 85/42

(84) Designated Contracting States:
DE FR IT NL SE

(71) Applicant: Hurley, Derek Melvin
Rhydlewis
Llandyssul Dyfed(GB)

(72) Inventor: Hurley, Derek Melvin
Rhydlewis
Llandyssul Dyfed(GB)

(74) Representative: James, Michael John Gwynne et al,
Wynne-Jones, Lainé & James Morgan Arcade Chambers
33, St. Mary Street
Cardiff Clamorgan CF1 2AB(GB)

(54) **A steam injection device.**

(57) A steam injection device is provided for an internal combustion engine. Air is introduced by a ramjet fan through a pipe 32 into a tank 31 in which water is heated to create steam. The water level is maintained by a valve in a separate water supply tank 38 fed by a reservoir 50. The air is directed down onto the surface of the water so as to take up the steam and the steam air mixture is then led through an insulated pipe 33 to the inlet manifold 52 of the engine via a Venturi 53. The incorporation of steam into the fuel and air mixture creates a more even and complete burning of the mixture.

EP 0 157 981 A1

Croydon Printing Company Ltd

"A steam injection device"

It has been known for some time that the mixing of vaporised water droplets into a normal petrol/air mixture for an internal combustion engine creates improved combustion of the fuel. It is believed that this effect creates a greater expansion of the hot gases together with a more even and complete burning of the mixture, resulting in smoother detonation and power, creating a lower fuel requirement for an equivalent power output.

A variety of devices have been developed over the years in an attempt to create suitable mixing of water vapour into the petrol/air mixture but none of these has been generally successful. In order for the device to be fully effective it should ideally comply with all the following stringent conditions, namely:-

1. It should produce an atomised water mist in variable quantities.
2. Introduction of the mist into the manifold otherwise than when the engine is hot would give problems during cold starting.
3. The amount of water vapour needs to vary automatically through the full range of throttle openings.
4. If the device is to be used as an adaptation to an existing system it should be easy to fit to

0157981

virtually any vehicle without requring other than minor engine modification.

5. It should be reliable in operation and require minimal maintenance.

6. It should be capable of operating fully automatically with no dashboard controls or switches.

7. It should be possible to arrange that it will switch itself on and off with the engine.

It is an object of this invention to provide a device which aims generally to meet the above conditions and to minimise the problems which exist.

According to the invention there is provided a steam injection device comprising an enclosed water tank having a water inlet provided with a water level control device, the tank incorporating a water heater and having an air inlet and a steam outlet, the air inlet incorporating air induction means for inducing air into the tank, during production of steam, into the space above a waterlevel in the tank determined by the water level control device.

This device is effective, when connected to the inlet manifold of an internal combustion engine, because it creates a supply of water vapour which varies automatically with throttle openings to suit all operating conditions of the engine. Thus, with a suitable choice of water heater, steam will only be produced after a period of time substantially equivalent to the time which it takes the engine itself to warm up so that premature injection of water vapour is avoided. Since the steam is partly drawn from the water tank by the natural vacuum in the manifold and partly blown in by the effect of the air induction means, the amount of steam drawn in tends to be controlled automatically by the natural vacuum in the manifold which is in turn determined by the throttle opening to the manifold. The device is fully automatic and will be switched on and off with the engine by connecting the heater to the same electrical supply line as the ignition. The device can readily be installed in an existing vehicle. Thus the steam outlet of the water tank may be connected into the oil fume extractor pipe from the rocker box to the inlet manifold of the engine. This is conveniently achieved by providing that the steam outlet is a small bore pipe terminating in a T-piece for connection into the oil fume extractor pipe. A preferred alternative provides that the steam outlet pipe incorporates a Venturi restriction where it is to be connected into the inlet manifold.

Whilst the air induction means could theoretically comprise an electrical fan controlled by a temperature switch which senses the temperature of the water in the water tank, one much simpler arrangement is provided by a tube which leads from below the water level within the tank to the fan and acts as a steam jet tube to drive the fan. Thus the fan will only operate to introduce air into the tank, and thus create a supply of steam at a moderate pressure through the steam outlet, when the water in the water tank has been heated sufficiently to cause steam production. Alternatively a fan could be provided in the air inlet, downstream of a scoop to be positioned to face the normal direction of forward movement of the vehicle, the fan being driven automatically by the air forced into the scoop during movement of the vehicle. The fan speed will then be related to the vehicle speed and therefore to a function of the engine speed. The air inlet will most preferably incorporate an air filter.

The water level control device is conveniently a float valve connected through the water inlet to a water reservoir. It is preferable to provide the water level control device in a separate water supply tank interconnected with the water tank, so that it will not be subjected to heat in the heated water and steam.

The heater will ideally comprise a quartz halogen or other comparable light bulb. It is preferred that perforated baffle plates in the water tank should define a region around the heater to help to retain water therein during turning movements of a vehicle. The invention also extends to a carburettor system for an internal combustion engine including a steam injection device of this invention as hereinbefore defined connected to the inlet manifold leading from the carburettor.

The invention may be performed in various ways and preferred embodiments thereof will now be described with reference to the accompanying drawings, in which:-

Figure 1 is a sectional view through a water tank of one form of steam injection device of this invention;

Figure 2 is a section on line II-II of Figure 1;

Figure 3 is a section through an associated water supply tank;

Figure 4 is a diagrammatic illustration of the parts of the steam injection device interconnected to the manifold of an internal combustion engine;

Figure 5 is a sectional view through a water tank of another form of steam injection device of this invention; and

Figure 6 is an illustration of the device shown in Figure 5 installed in a vehicle engine compartment.

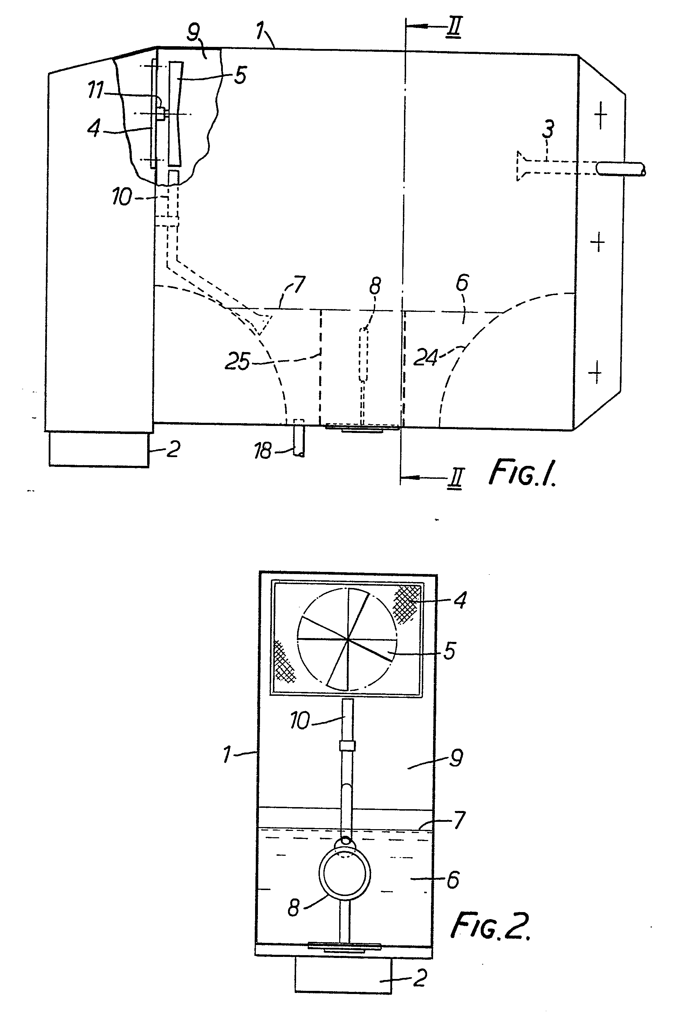

The main part of the steam injection device shown in Figures 1 to 4 comprises a water tank 1 having an air inlet 2 and a steam outlet pipe 3. The air inlet 2 leads into the interior of the tank 1 through an air filter 4 and past an air circulation fan 5. Water 6 within the tank maintained to a level 7 is heated by a heater element 8 connected to the 12-volt battery of the vehicle. When the water reaches boiling point steam will be created to fill the space 9 but also will be directed through a tube 10 which directs a jet of steam onto the fan 5 to cause it to rotate about a bearing 11 and draw in air through the inlet 2. Operation of the fan also prevents the steam from being lost through the air inlet 2 so that it can only leave through the steam outlet 3. The fan 5 could be replaced by a ramjet fan.

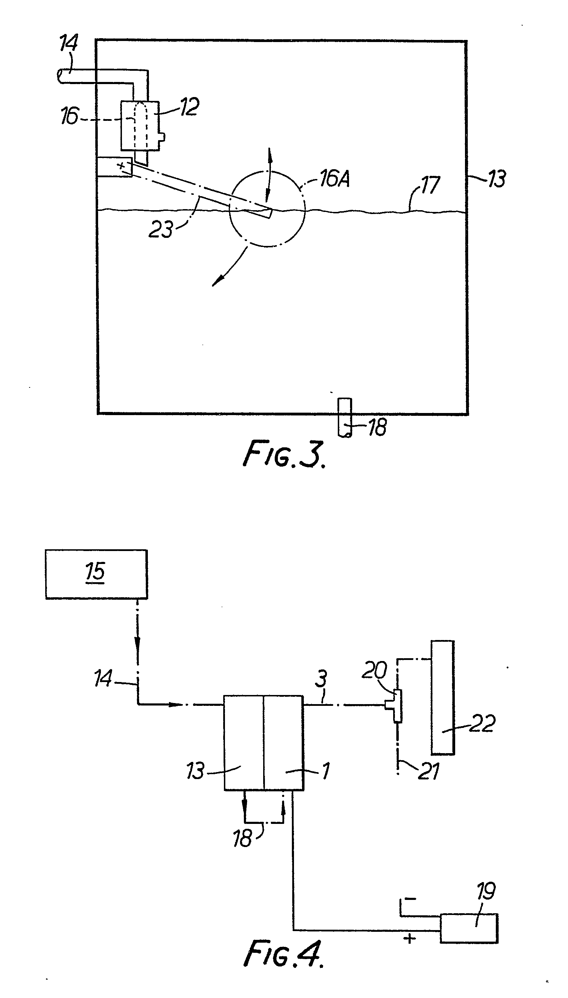

The level 7 as shown in Figure 3, within the tank 1 is maintained by a valve 12 within a water supply tank 13 fed through a pipe 14 from a reservoir 15 (Figure 4). The valve 12 incorporates a needle closing member 16 controlled by a float 16A so as to determine the level 17 for water within the supply tank 13 which is equivalent to the level 7 in the tank 1. Tanks 1 and 13 are interconnected by a supply pipe 18.

The complete system shown in Figure 4 illustrates the two water tanks 1 and 13 and the reservoir 15 together with the battery 19 which is connected to the heater element 8. The outlet pipe 3 from the tank 1 is connected by a T-piece 20 into an oil fume extractor pipe 21 leading from the rocker box cover of the engine to the base of the carburettor flange or the inlet manifold 22.

It will be appreciated that this system can readily be installed into an existing engine with very minor modification. A miniature warning light could be fitted to the vehicle dashboard and would be connected to a microswitch attached to the arm 23 (carrying the float 16A in the water tank 13, Figure 3). This microswitch would operate if the level of water drops significantly below the datum level 17 to indicate that the water supply is getting low and that the reservoir 15 should be refilled. A protective cartridge fuse should also be incorporated. A flexible air intake tube can be connected to the air inlet 2 by means of a clip and fitted in a convenient place at the bottom of the engine compartment.

It will be noted from Figure 1 that the end walls of the space containing the water 6 to be heated are defined by curved members 24. There are also a pair of perforated baffle plates 25 within the water container space. The baffle plates in particular act to limit the speed at which water might otherwise swirl away from the heater 8 during fast cornering of a vehicle so that the water level in the region of the heater is substantially maintained. Water retention is still further enhanced if the curved plates 24 are replaced by angular plates, the points defining the angled corners facing one another at about the height of the heater 8. This creates a water retaining space which generally has the shape of an hour-glass in vertical cross-section.

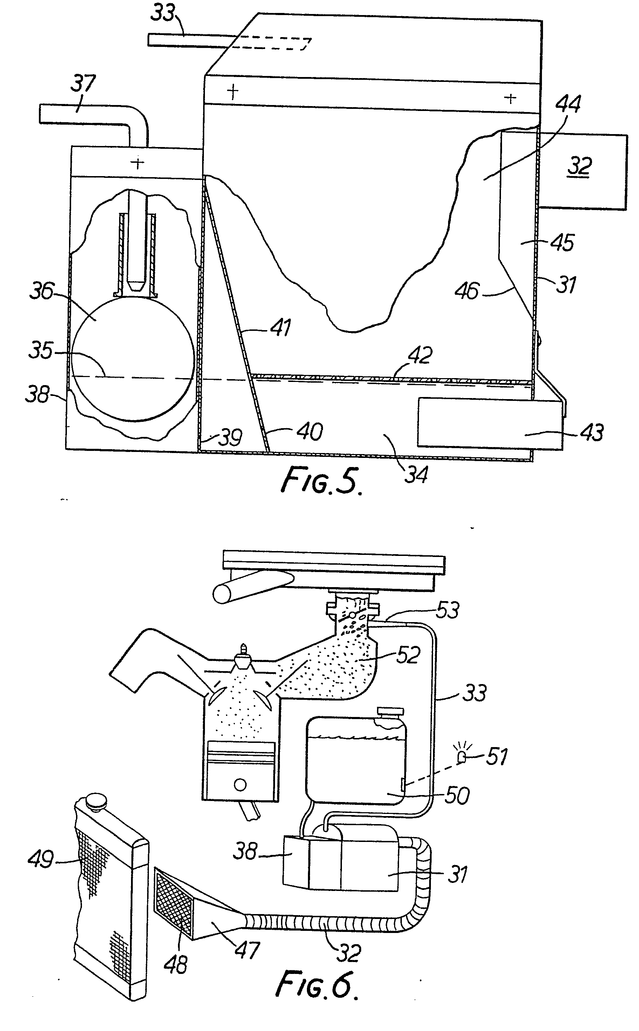

The steam injection device shown in Figure 5 incorporates a number of features similar to those of the device of Figure 1. In this instance a water tank 31 is provided with an air inlet 32 and a steam outlet pipe 33. Water 34 within the tank is maintained to a level 35 by a float valve 36 associated with a water inlet pipe 37 leading from a reservoir. The float valve 36 is within a separate water supply tank 38 which communicates with the tank 31 through a small hole 39 and a further hole 40 in a baffle plate 41 provides an inlet for the water to the main heating area whose top is enclosed by a perforated baffle plate 42. Within this heating area is positioned a heater 43 which comprises a quartz halogen light bulb which has been found to be particularly efficient in providing the required heating. The baffle plates 41 and 42 tend to retain the water even during cornering or tilting of the vehicle, whilst the perforations in the plate 42 allow the steam to escape into the space 44. The baffle plate 41 also prevents boiling water from affecting the float valve 36. Air from the air inlet 42 is fed into this space 44 through a deflector box 45 having an outlet 46 which causes the air to be directed downwardly towards the surface of the water so as to pick up the steam.

As can be seen from Figure 6 the air inlet 32 is connected to an air scoop 47 incorporating a ram driven fan and having a removable filter plate 48 on the front. The scoop 47 is positioned behind the car radiator 49 so that it is supplied with pre-heated air. Figure 6 also shows a water reservoir 50 feeding the water supply tank 38 and a level detector in the reservoir 50 is connected to a warning lamp 51 which will be provided on the dashboard display. The steam outlet pipe 33 is connected into the inlet manifold 52 of the engine via a Venturi restriction 53. The pipe 33 (and the comparable pipe 3 in the device shown in Figures 1 to 4) is covered with a heat insulating material.

The system will then work entirely automatically subject to the need to top up the reservoir, when needed. It is estimated that it takes about five minutes on average to warm up an engine when starting the vehicle from cold and the heating element would be chosen so that it would take a similar time to commence to produce steam in the space within the water tank. In hard water areas a proprietory water softener could be used and in winter conditions a proprietory anti-freeze solution (such as that used in windscreen washers) could be added.

BAD ORIGINAL

A vehicle fitted with one of the steam injection devices illustrated is expected to run more smoothly and quietly and give a better all-round performance and produce a reduction in fuel consumption which could be in the region of 5% to 20%, depending on vehicle speed. Water consumption (from the reservoir) is likely to be approximately half a gallon for 500 miles for a 2000 cc family car.

Various changes and modifications may be made to the construction of the device without departing from the scope of the invention, as may occur to those skilled in the art.



BAD ORIGINAL

Claim(s) Nr 13 deemed to be abandoned





CLAIMS

1. A steam injection device comprising an enclosed water tank having a water inlet provided with a water level control device, the tank incorporating a water heater and having an air inlet and a steam outlet, the air inlet incorporating air induction means for inducing air into the tank, during production of steam, into the space above a water level in the tank determined by the water level control device.

2. A steam injection device according to claim 1, wherein the air induction means is or includes a fan.

3. A steam injection device according to claim 2, wherein the fan is provided in the air inlet downstream of a scoop, such that the fan will be drive automatically by air forced into the scoop.

4. A steam injection device, according to claim 2, wherein a tube leads from below the water level within the tank to the fan and acts as a steam jet tube to drive the fan.

5. A steam injection device according to any one of claims 1 to 4, wherein the air inlet incorporates an air filter.

6. A steam injection device according to any one of claims 1 to 5, wherein the water level control device is a float valve connected through the water inlet to a water reservoir.



BAD ORIGINAL

7. A steam injection device according to any one of claims 1 to 6, wherein the water level control device is situated in a separate water supply tank interconnected with the water tank.

8. A steam injection device according to any one of claims 1 to 7, wherein the steam outlet pipe incorporates a Venturi restriction where it is to be connected into the inlet manifold of an internal combustion engine.

9. A steam injection device according to any one of claims 1 to 7, wherein the steam outlet is a small bore pipe terminating in a T-piece for connection into an oil fume extractor pipe from the rocker box to the inlet manifold of an internal combustion engine.

10. A steam injection device according to any one of claims 1 to 9, wherein the heater comprises a quartz halogen or other comparable light bulb.

11. A steam injection device according to any one of claims 1 to 10, wherein perforated baffle plates are provided to define a region around the heater.

12. A carburettor system for an internal combustion engine including a steam injection device as claimed in any one of claims 1 to 11 connected to the inlet manifold leading from the carburettor.

13. A steam injection device substantially as herein described with reference to the accompanying drawings.

BAD ORIGINAL

0157981

9
1
5
11
4
10
II
3
7
8
6
25
24
2
18
II

FIG.1.

4
5
10
1
9
7
6
8
2

FIG.2.

0157981

2/3

14
12
16
16A
17
13
23
18

FIG.3.

15
14
3
20
22
13
1
21
18
19
-
+

FIG.4.

33
37
44
32
45
31
46
36
41
35
42
38
39
40
43
34

FIG. 5.

53
52
33
51
50
38
31
49
48
47
32

FIG. 6.

European Patent Office

0157981

Application number

# EUROPEAN SEARCH REPORT

EP 84 30 6692

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | US-A-1 771 814 (OSBORN)<br>* Page 1, lines 40-100; figure 1 * | 1,6,7, 11,12 | F 02 M 25/02 |
| Y | US-A-4 030 456 (CORPUS)<br>* Column 3, lines 18-33; column 4, lines 24-62; figures 1,3 * | 1,6,7, 11,12 | |
| A | | 5 | |
| Y | FR-A-2 301 696 (DAIDIE)<br>* Page 5, lines 5-37; figure 5 * | 1,12 | |
| A | GB-A- 383 816 (LOMBARD)<br>* Page 1, lines 52-90; figure 1 * | 1-3 | **TECHNICAL FIELDS SEARCHED (Int. Cl 4)** |
| A | FR-A- 990 670 (MEDORI)<br>* Page 1, lines 46-82; figures 1,9 * | 1,9 | F 02 M<br>F 02 B |

The present search report has been drawn up for all claims

| Place of search | Date of completion of the search | Examiner |
|---|---|---|
| THE HAGUE | 19-07-1985 | LEFEBVRE L.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82